# NOUVEAU FASCICULE DE BREVET EUROPEEN

(11) **EP 0 588 394 B2**
(45) Date de publication et mention de la décision concernant l'opposition: **27.08.2003**
(45) Mention de la délivrance du brevet: 22.10.1997
(21) Numéro de dépôt: 93202217.1
(22) Date de dépôt: 27.07.1993
(51) Int. Cl.: B65G 49/08, B65G 1/10, A47B 53/02

(54) **Magasin de stockage à châssis mobiles**
Lagerregal mit beweglichen Gestellen
Storage magazine with movable racks

(30) Priorité: 18.09.1992 IT VI920135
(43) Date de publication de la demande: 23.03.1994
(73) Titulaire: Piazza, Antonio, 36015 Schio (Vicenza) (IT)
(72) Inventeur: Piazza, Antonio, 36015 Schio (Vicenza) (IT)
(74) Mandataire: Grünecker, Kinkeldey, Stockmair & Schwanhäusser Anwaltssozietät

(56) Documents cités:
- CH-A- 510 569
- DE-A- 3 831 772
- FR-A- 1 125 331
- FR-A- 1 584 837
- FR-A- 2 143 996
- IT-U- 213 199
- NL-A- 8 403 373

## Description

La présente invention a pour objet un magasin à chassis inclinés mobiles pour le stockage d'articles de forme plane, telles que des plaques en verre ou en un autre matériau, étant observé que moyennant une adaptation particulière, ledit magasin peut être utilisé pour le stockage d'objets de toutes formes.

Le document IT-A-213 199 divulgue un magasin pour le stockage de plaques planes en verre de grandes dimensions, du type comprenant une série de châssis qui sont agencées pour permettre l'appui des plaques planes en verre à stocker, les châssis étant inclinés dans le même sens pour réaliser des surfaces d'appui planes inclinées pour les plaques en verre, et les châssis étant montés sur des chariots et mobiles par rapport à un bâti-support.

Un autre magasin de stockage pour stocker des plaques en verre est connu du document NL-A-84 03 373.

Le magasin suivant l'invention est défini à la revendication 1. Son originalité principale réside dans le fait qu'il est doté d'une structure de support qui permet aux châssis mobiles élémentaires une translation perpendiculaire à leur plan, afin de permettre le prélèvement ou l'insertion des articles à stocker dans lesdits châssis, et dans le fait que les châssis sont inclinés tous dans le même sens.

Un magasin comprenant une série de châssis mobiles transversalement et permettant ainsi l'éloignement de chaque châssis par rapport aux autres est par exemple connu du document CH-A-510 569 ou du document DE-A-38 31 772.

Il va de soi que des systèmes de sécurité convenables doivent être prévus pour éviter radicalement l'éventualité de manoeuvres dangereuses pour le personnel affecte au magasin.

Le dessin annexé, donné à titre d'exemple. permettra de mieux comprendre l'invention, les caractéristiques qu'elle présente et les avantages qu'elle est susceptible de procurer
Fig. 1 est une vue en perspective d'un magasin a châssis mobiles suivant l'invention, dont la manoeuvre, manuelle ou motorisée, est obtenue à l'aide de crémaillères.
Fig. 2 montre de la même manière un magasin dont les châssis mobiles sont actionnés a l'aide d'une chaîne de commande.
Fig. 3 illustre l'agencement d'un magasin dont les châssis mobiles sont actionnes a l'aide de dispositifs de commande de type hydraulique ou pneumatique.
Fig. 4 est une vue en élévation de la partie inférieure d'un châssis dont les galets de roulement sont disposes sur le coté exterieur des rails de guidage.
Fig. 5 montre une variante dans laquelle les galets sont montes sur le côte intérieur des rails.
Fig. 6 est une vue de côte du chariot prévu a la partie inférieure d'un châssis.
Fig 7 represente en coupe transversale une autre forme de realisation ou magasin suivant fig 4
Fig. 8 illustre l'adoption de cette même forme de réalisation que dans le cas suivant fig. 5 (galets intérieurs).
Fig. 9 est une vue de côté du chariot illustré aux fig. 7 et 8.
Fig. 10 est une coupe à échelle agrandie du chariot suivant fig. 9.

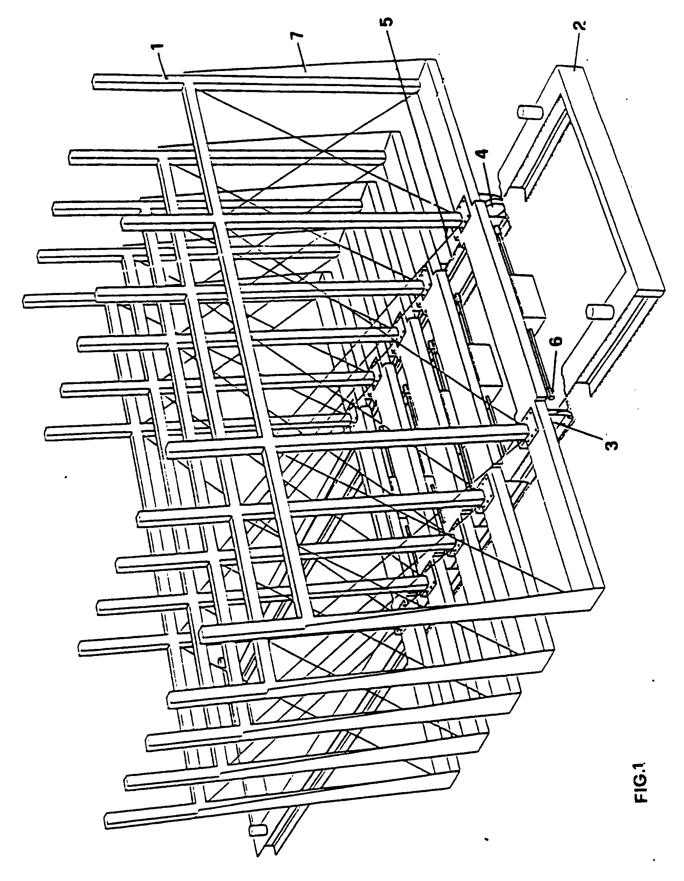

Le magasin qui a été représenté en fig. 1 comprend une série de châssis mobiles 1. susceptibles de se déplacer perpendiculairement au mouvement de chargement et de déchargement des articles le long d'un support inférieur 2 à profil avantageusement rectangulaire, fixé au sol.

Dans cette forme de réalisation, chaque châssis mobile 1 est fixé sur un chariot 3 muni de galets 4 mobiles sur les côtés des profilés longitudinaux ou rails du support 2 : les profilés précités sont munis de montants qui supportent avantageusement des crémaillères 5 prévues au-dessus ou au-desscus des poutrelles du support 2, lesdites crémaillères coopérant avec des roues dentées 6 portées par le chariot 3 dont est muni chaque châssis 1 en vue de permettre son déplacement. La commande manuel le peut être assurée à l'aide d'un renvoi mécanique actionné a l'aide d'un volant.

Chaque châssis 1 est rigidifie par des voiles latéraux 7 qui sont susceptibles de s'ouvrir et qui font fonction de dispositifs de sécurité.

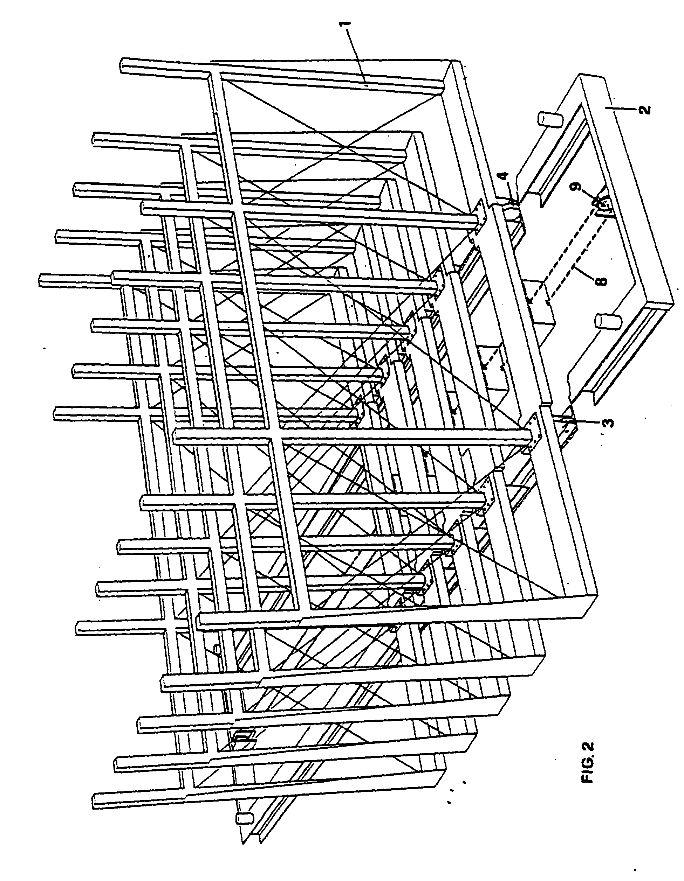

Dans la forme de réalisation illustrée en fig. 2. le magasin comprend également des châssis 1 dont le déplacement est commandé par une ou plusieurs chaînes 8, leur nombre variant en fonction du type et de la nature des charges à déplacer ; ces chaînes coopèrent avec des roues dentées 9 convenablement motorisées pour permettre le déplacement d'un groupe de châssis par rapport aux autres, en vue de la création d'un espace libre qui permet l'extraction eu l'introduction des articles sur le châssis qui a été ainsi libere.

Il va de soi qu'il y a lieu de prevoir autant de moyens de commande qu'il y a de châssis a déplacer.

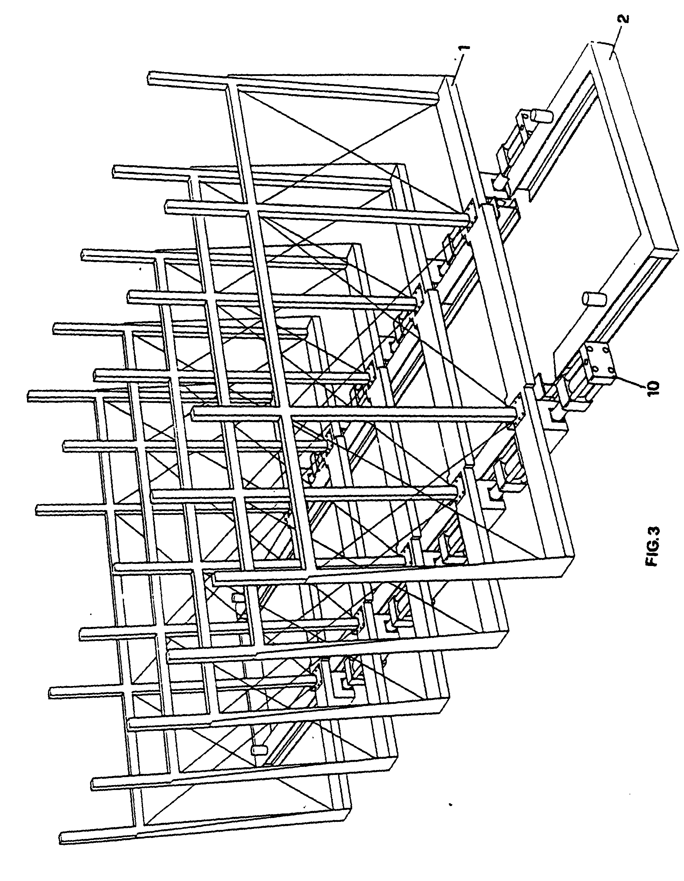

Dans la forme de réalisation illustree en fig. 3, le déplacement des châssis 1 est assuré par une serie de vérins hydrauliques ou pneumatiques 10 commandés à travers un programme, pour permettre l'éloignement d'un groupe de châssis en vue de la création de l'espace libre nécessaire à l'introduction ou au déchargement des matériaux.

Ici également. le nombre des vérins 10 est fonction du type et de la nature des charges a déplacer. Ces vérins peuvent être disposés dans la partie centrale de chaque châssis.

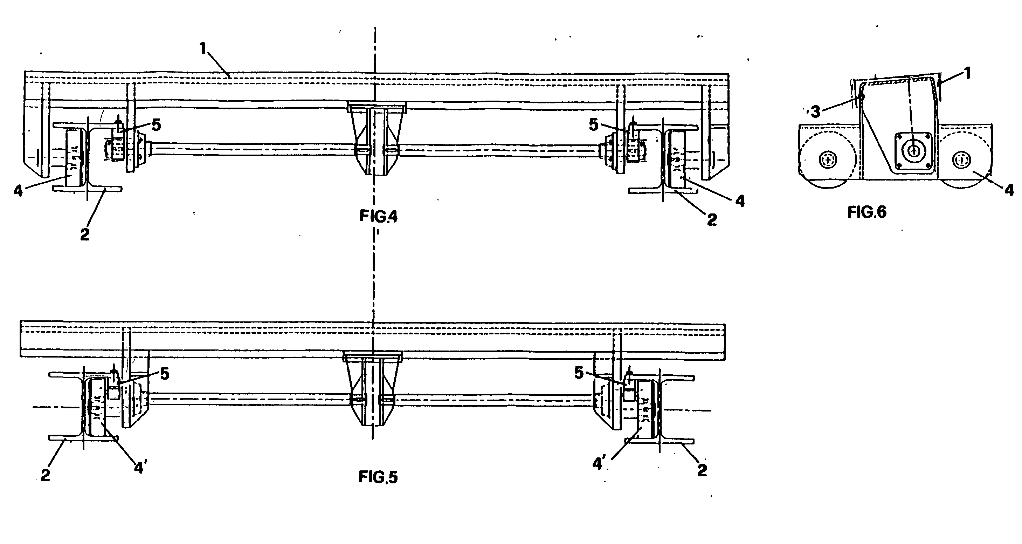

Dans le magasin qui a ete illustre en fig. 4. les galets 4, dont l'axe est porte car le chariot 3 qui supporte lui-même l'embase des châssis 1, sont disposés sur le côté extérieur des poutrelles parallèles de guidage du support 2, tandis que dans la variante qui apparaît en fig. 5, ces galets référencés 4', sont au contraire disposés sur le côté intérieur des poutrelles précitées.

Dans un cas comme dans l'autre, les crémaillères 5 sont fixées sur des ailettes prévues au-dessus ou au-dessous des poutrelles du support 2.

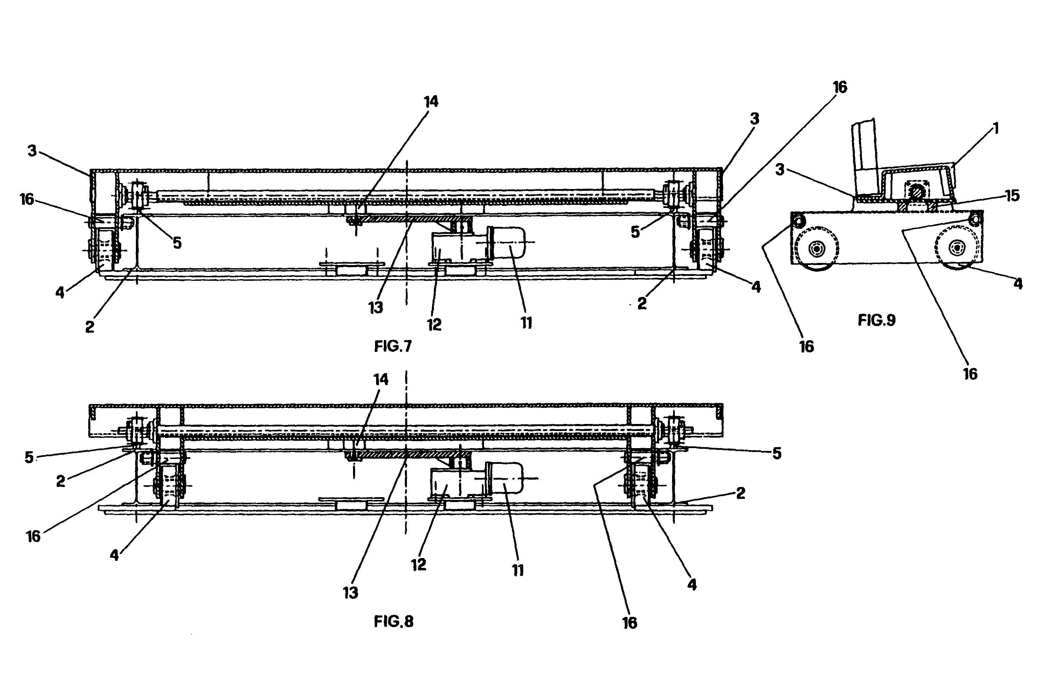

En fig. 7 et 8, on peut voir des variantes de réalisation du dispositif de commande, lequel comprend un moteur électrique 11 qui, à travers un réducteur 12, actionne un levier 13 équipé d'un tambour 14 qui en roulant à l'intérieur d'un curseur 15 assure le déplacement du chariot 3.

Dans la forme de réalisation suivant fig. 7, les galets porteurs 4 sont disposés à l'extérieur du support 2 tandis qu'en fig. 8, ces galets 4 se trouvent à l'intérieur du support.

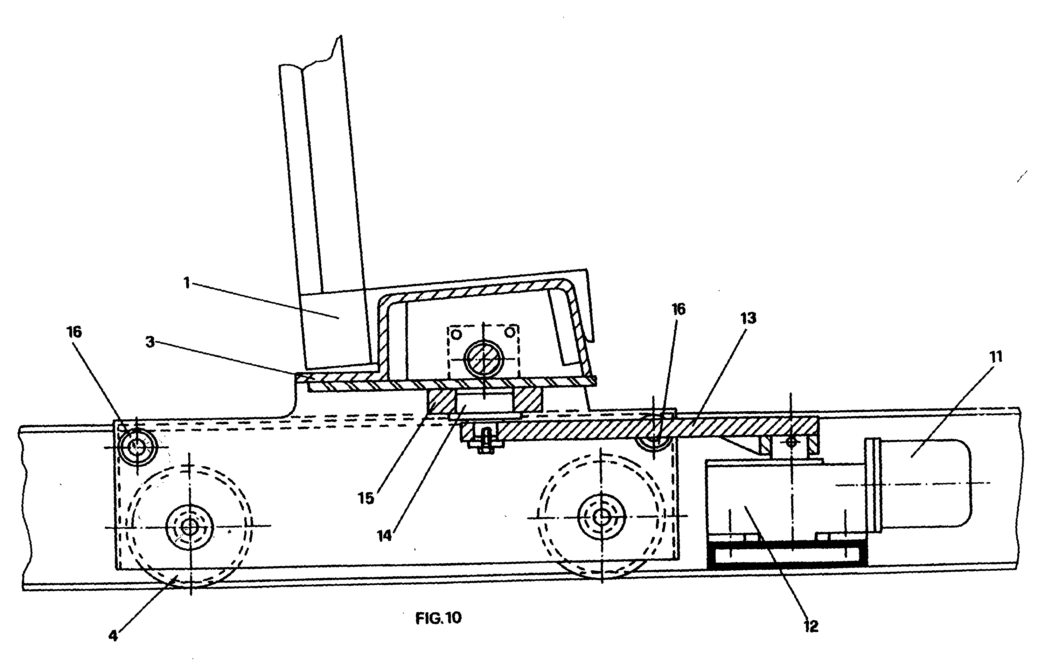

La coupe à échelle agrandie suivant fig. 10 montre bien le moteur 11 qui, à travers le réducteur 12, fait tourner le levier 13, dont le tambour 14 coopère avec le curseur 15 pour assurer le déplacement du chariot 3.

En fig. 7, 8 et 10 on peut voir un dispositif anti-rebond qui est formé par des axes excentriques 16 sur lesquels sont calés des tambours tournants, en vue d'éviter le rebond des chariots 3 qui supportent chaque châssis 1 au cas ou ce dernier travaille en position oblique.

## Revendications

1. Magasin pour le stockage de plaques planes en verre, du type comprenant une série de châssis (1) inclinés, mobiles par rapport à un bâti-support (2), qui sont agencés pour permettre l'appui des plaques en verre à stocker, dans lequel
les châssis (1) disposés inclinés tous dans le même sens sont montés sur des chariots (3) du type monobloc,
les chariots (3) comprennent des galets roulants (4) qui portent les châssis (1) et par lesquels les châssis (1) sont mobiles transversalement, c'est-à-dire perpendiculairement à leur plan, sur le bâti-support (2) aussi du type monobloc, pour permettre l'extraction des plaques en verre contenues dans chaque châssis (1) en éloignant ledit châssis (1) par rapport aux suivants,
le bâti-support (2) comprend deux supports en double T parallèles l'un à l'autre à chacun desquels sont associés deux galets roulants (4), agencés l'un derrière l'autre en direction de déplacement, de l'un des chariots (3), chacun des supports en double T étant agencés de telle sorte que des traverses du support en double T parallèles les unes aux autres s'étendent dans l'horizontale, et dans lequel
i) soit il est prévu deux axes respectifs (16) associés aux deux galets roulants (4) sur le chariot (3) pour chaque support en double T, axes qui sont agencés de façon excentrique par rapport aux galets roulants (4) et sur lesquels est monté un tambour tournant respectif, l'un des tambours tournants étant agencé à l'extrémité antérieure en direction de déplacement et l'autre tambour tournant étant agencé à l'extrémité postérieure en direction de déplacement du chariot (3), et la traverse supérieure du support en double T associé se situant immédiatement au-dessus des tambours tournants;
ii) soit les deux galets roulants (4) sont agencés entre les traverses parallèles les unes aux autres du support en double T associé, et la traverse supérieure du support en double T associé se situe immédiatement au-dessus des deux galets roulants (4).

2. Magasin suivant la revendication 1, **caractérisé en ce que** le déplacement d'un groupe de châssis, pour le distancer des autres, est réalisé manuellement.

3. Magasin suivant la revendication 1, **caractérisé en ce que** le déplacement des châssis est assuré par un moteur (11), agencé de manière à entraîner en rotation des galets (4), portés par le chariot incliné (3), dont est muni chaque châssis (1) afin de permettre son déplacement.

4. Magasin suivant la revendication 1, **caractérisé en ce que** la commande du déplacement des chassis (1) est obtenue à l'aide d'au moins une chaîne (8) ou autre organe mécanique similaire.

5. Magasin suivant la revendication 1, **caractérisé en ce que** la commande du déplacement d'un groupe de chassis (1) par rapport à un autre est obtenue à l'aide d'un ensemble de verins hydrauliques ou pneumatiques (10).

6. Magasin, suivant la revendication 1, **caractérisé en ce qu'**il comporte un dispositif d'actionnement unique, qui comprend un moteur (11) et un réducteur (12) pour la commande en rotation d'un levier (13), qui porte un tambour (14), monté à l'intérieur d'un curseur (15), lequel est fixé à un chariot (3) pour provoquer le déplacement de celui-ci en transformant ainsi le mouvement de rotation issu du réducteur (12) précité en un mouvement rectiligne dudit chariot incliné (3).

## Patentansprüche

1. Lagerregal für die Lagerung von flachen Scheiben aus Glas des Typs, der eine Reihe von geneigten Gestellen (1) enthält, die in Bezug auf einen Tragrahmen (2) beweglich sind, und die so angeordnet sind, dass sie das Abstützen der zu lagernden Glasscheiben gestatten, wobei
die Gestelle (1), die alle in gleicher Richtung geneigt angeordnet sind, auf
Einblock-Fahrgestellen (3) montiert sind, wobei
die Fahrgestelle (3) Laufrollen (4) aufweisen, welche die Gestelle (1) tragen und durch welche die Gestelle (1) quer d.h. senkrecht zu ihrer Lagerebene, auf dem ebenfalls in einem Block ausgebildeten Tragrahmen (2) verfahrbar sind, um das Herausnehmen der in jedem Gestell (1) enthaltenen Glasscheiben durch Verschieben eines Gestelles (1) relativ zu dem jeweils Nächstfolgenden zu gestatten, wobei
der Tragrahmen (2) zwei sich parallel zueinander erstreckende Doppel-T-Träger umfaßt, denen jeweils zwei in Verfahrrichtung hintereinander angeordnete Laufrollen (4) eines der Fahrgestelle (3) zugeordnet sind, wobei jeder der Doppel-T-Träger derart angeordnet ist, dass parallel zueinander verlaufende Querstege des Doppel-T-Trägers sich in der Horizontalen erstrecken und wobei
i) entweder an dem Fahrgestell (3) zu jedem Doppel-T-Träger zwei den beiden Laufrollen (4) jeweils zugeordnete Achsen (16) vorgesehen sind, die exzentrisch zu den Laufrollen (4) angeordnet sind und auf denen jeweils eine Drehtrommel angeordnet ist, wobei eine der Drehtrommeln an dem in Verfahrrichtung vorderen und die andere Drehtrommel an dem in Verfahrrichtung hinteren Ende des Fahrgestells (3) angeordnet ist und wobei sich der obere Quersteg des zugeordneten Doppel-T-Trägers unmittelbar oberhalb der Drehtrommeln befindet;
ii) oder die beiden Laufrollen (4) zwischen den sich parallel zueinander erstreckenden Querstegen des zugeordneten Doppel-T-Trägers angeordnet sind und sich der obere Quersteg des zugeordneten Doppel-T-Trägers unmittelbar oberhalb der beiden Laufrollen (4) befindet.

2. Lagerregal nach Anspruch 1, **dadurch gekennzeichnet, dass** die Verschiebung einer Gruppe von Gestellen, um diese von den anderen zu entfernen, manuell durchgeführt wird.

3. Lagerregal nach Anspruch 1, **dadurch gekennzeichnet, dass** die Verschiebung der Gestelle durch einen Motor (11) erfolgt, der so betätigt wird, dass er die Rollen (4), die von dem geneigten Fahrgestell (3) getragen werden, mit dem jedes Gestell (1) ausgerüstet ist, in Drehung versetzt, um dessen Verschiebung zu bewirken.

4. Lagerregal nach Anspruch 1, **dadurch gekennzeichnet, dass** der Antrieb zur Verschiebung der Gestelle (1) mittels zumindest einer Kette (8) oder einer ähnlichen mechanischen Vorrichtung erfolgt.

5. Lagerregal nach Anspruch 1, **dadurch gekennzeichnet, dass** der Antrieb zur Verschiebung einer Gruppe von Gestellen (1) in bezug auf eine andere Gruppe mittels einer Anzahl hydraulischer oder pneumatischer Winden (10) erfolgt.

6. Lagerregal nach Anspruch 1, **dadurch gekennzeichnet, dass** es eine einzelne Antriebsvorrichtung enthält, die einen Motor (11) und ein Untersetzungsgetriebe (12) enthält, um einen Hebel (13) in Rotation zu versetzen, der eine Trommel (14) trägt, die im Inneren eines Schiebestellringes (15) angeordnet ist, der auf einem Fahrgestell (3) befestigt ist, um dessen Verschiebung hervorzurufen, wobei gleichfalls die vom Untersetzungsgetriebe (12) veranlasste Drehbewegung in eine geradlinige Bewegung des Fahrgestells (3) übertragen wird.

## Claims

1. A storage device for storing flat plate glass of the type comprising a series of inclined frames (1), movable in relation to a base frame (2), which are configured to hold the plate glass to be stored, wherein the frames (1), all inclined in the same direction, are mounted on monobloc type carriages (3), wherein
said carriages (3) comprise running rollers (4) which support said frames (1) and through which said frames (1) are mobile transversely, that is to say perpendicularly to their supporting plane, on the base frame (12) also of the monobloc type, to permit the removal of the plate glass contained in each frame by shifting a frame (1) away from the next ones, wherein
the base frame (2) comprises two double-T-carriers extending in parallel with one another, each having assigned thereto two running rollers (4) of one of the carriages (3) that are sequentially arranged in the direction of movement, each of said double-T-carriers being arranged such that parallel-extending transverse beams of said double-T-carriers extend in the horizontal, and wherein
i) either two axes (16), each assigned to the two running rollers (4), are provided on the carriage (3) with respect to each double-T-carrier, the axes (16) being eccentrically arranged with respect to the running rollers (4), and on which a respective rotary drum is arranged, one of said rotary drums being arranged on the end of the carriage (3) that is the front one in the direction of movement, and said other rotary drum being arranged on the end of the carriage (3) that is the rear one in the direction of movement, and the upper transverse beam of the associated double-T-carrier being directly positioned above the rotary drums;
ii) or the two running rollers (4) are arranged between the parallel-extending transverse beams of the associated double-T-carriers and the upper transverse beam of the associated double-T-carrier is positioned directly above the two running rollers (4).

2. A storage device according to claim 1, **characterized in that** the movement of a group of frames, to separate it from the others, is carried out manually.

3. A storage device according to claim 1, **characterized in that** the movement of the frame is performed by a motor (11), fitted in such a manner as to rotate the rollers (4) on the inclined carriage (3), with which each frame (1) is provided to permit the movement thereof.

4. A storage device according to claim 1, **characterized in that** control of the movement of the frame (1) is obtained by the use of at least one chain (8) or other similar mechanical part.

5. A storage device according to claim 1, **characterized in that** control of the movement of a group of frames (1) in relation to another is obtained by the use of a set of hydraulic or pneumatic actuators (10).

6. A storage device according to claim 1, **characterized in that** it comprises a unique activating device, which consists of a motor (11) and a reducer (12) for rotational actuation of a lever (13), which has a drum (14), mounted inside a slider (15), the latter fixed to a carriage (3) to produce the movement thereof thus transforming the rotational movement from the aforementioned reducer (12) into a rectilinear movement of the said inclined carriage (3).
